(19) **Europäisches Patentamt / European Patent Office / Office européen des brevets**

(11) **EP 4 066 445 B1**

(12) **EUROPEAN PATENT SPECIFICATION**

(45) Date of publication and mention
of the grant of the patent:
**11.03.2026   Bulletin 2026/11**

(21) Application number: **20700656.0**

(22) Date of filing: **08.01.2020**

(51) International Patent Classification (IPC):
*H04L 43/04* (2022.01)        *H04L 43/026* (2022.01)
*H04L 41/5067* (2022.01)      *H04L 41/142* (2022.01)

(52) Cooperative Patent Classification (CPC):
**H04L 41/142; H04L 41/5067; H04L 43/026;
H04L 43/04**

(86) International application number:
**PCT/EP2020/050319**

(87) International publication number:
**WO 2021/139883 (15.07.2021 Gazette 2021/28)**

(54) **DEVICES AND METHODS FOR WEB QUALITY EVALUATION**

VORRICHTUNGEN UND VERFAHREN ZUR BEWERTUNG DER WEB-QUALITÄT

DISPOSITIFS ET PROCÉDÉS D'ÉVALUATION DE QUALITÉ WEB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.10.2022   Bulletin 2022/40**

(73) Proprietor: **Huawei Technologies Co., Ltd.
Shenzhen, Guangdong 518129 (CN)**

(72) Inventors:
• **ROSSI, Dario**
**80992 Munich (DE)**
• **HUET, Alexis**
**80992 Munich (DE)**

(74) Representative: **Roth, Sebastian
Mitscherlich PartmbB
Karlstraße 7
80333 München (DE)**

(56) References cited:
• **YOUSSEF A ET AL: "Inter-stream adaptation for collaborative multimedia applications",** COMPUTERS AND COMMUNICATIONS, 1997. PROCEEDINGS., SECOND IEEE SYMPOSIU M ON ALEXANDRIA, EGYPT 1-3 JULY 1997, LOS ALAMITOS, CA, USA,IEEE COMPUT. SOC, US, 31 July 1997 (1997-07-31), pages 116 - 120, XP010241331, ISBN: 978-0-8186-7852-3, DOI: 10.1109/ISCC.1997.615981
• **ALEXIS HUET ET AL: "Web Quality of Experience from Encrypted Packets",** 20190819; 20190819 - 20190823, 19 August 2019 (2019-08-19), pages 30 - 32, XP058440163, ISBN: 978-1-4503-6886-5, DOI: 10.1145/3342280.3342297
• **SCHATZ RAIMUND ET AL: "From Packets to People: Quality of Experience as a New Measurement Challenge",** 31 December 2013, ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 219 - 263, ISBN: 978-3-642-17318-9, XP047292694

- **ENRICO BOCCHI ET AL: "Measuring the Quality of Experience of Web users", COMPUTER COMMUNICATION REVIEW, ACM, NEW YORK, NY, US, vol. 46, no. 4, 23 December 2016 (2016-12-23), pages 8 - 13, XP058309588, ISSN: 0146-4833, DOI: 10.1145/3027947.3027949**

## Description

## TECHNICAL FIELD

The present disclosure relates to web quality assessment, in particular, to approximating in-browser metrics from network traffic. The disclosure allows internet service providers (ISPs) to precisely assess a web quality of experience of their customers. To this end, the present disclosure provides a device and a method for quality evaluation of a web session.

## BACKGROUND

ISPs must be able to understand the web browsing experience they deliver to their customers. Many objective, in-browser metrics exist for this purpose. However, pervasive encryption often makes such information completely opaque for the ISPs.

Many in-browser objective metrics have been defined by industries and academia to estimate the quality of experience (QoE) of web users. They are referred to as web quality of service (WebQoS) metrics, including, for example: page load time, speed index (SI), byte index (BI), and above the fold time. It is easy to compute WebQoS metrics through a browser, however, the problem is how to infer these metrics from network traffic, which the ISPs have access to.

YOUSSEF A ET AL, "Inter-stream adaptation for collaborative multimedia applications", COMPUTERS AND COMMUNICATIONS, 1-3 JULY 1997, LOS ALAMITOS, CA, USA,IEEE COMPUT. SOC, pages 116 - 120 introduces "Quality of Session" control, which is achieved by employing a monitoring mechanism for measuring the perceived QoS of each stream. ALEXIS HUET ET AL, "Web Quality of Experience from Encrypted Packets", 20190819; pages 30 - 32, discuss estimating metrics from streams of encrypted packets, using classic supervised learning techniques.

## SUMMARY

In view of the above-mentioned challenges, embodiments of the invention aim to provide a device and method for approximating an in-browser metric, in particular one of the aforementioned objective in-browser metrics, from network traffic. An objective is, in particular, to perform the approximation at flow level. One aim is also to improve an efficiency of the approximation and reduce a computation cost. Further, it is desirable to generalize the approximated metric to several other in-browser metrics, which are not typically accessible by a network device.

The objective is achieved by the embodiments of the invention as described in the enclosed independent claims. Advantageous implementations of the embodiments of the invention are further defined in the dependent claims.

A first aspect of the present disclosure provides a device for quality evaluation of a web session, wherein the device is configured to: receive the web session, wherein the web session comprises a plurality of flows; compute a set of statistics for a flow of the plurality of flows; compute per-flow quality metric values for the plurality of flows based on the set of statistics computed for the flow; and determine a quality metric value of the web session based on the computed per-flow quality metric values.

In this disclosure, a "flow" (which may also be referred to as "traffic flow") may comprise a sequence of packets (e.g., "data packet") for the web session. Receiving the web session, by the device of the first aspect, may comprise receiving the flow of the packets from a source, e.g., from a device providing the web session. Instead of looking at the packet level, the present disclosure proposes a solution to compute quality metrics of a web session at a flow level. This is achieved by the device of the first aspect. In this way, the computational complexity compared to working at the packet level can be significantly reduced.

In an implementation form of the first aspect, the per-flow quality metric is a per-flow BI, and the device is configured to compute the set of statistics for the flow based on a flow start time of the flow, a flow size of the flow, and an absement of the flow.

One of the per-flow quality metrics, in this case a per-flow BI, is computed according to an embodiment of the invention. It should be noted that the present disclosure also allows to compute other per-flow quality metrics at the flow level.

In an implementation form of the first aspect, the set of statistics, for the flow, comprises at least the following three statistics: an absolute flow start time, $t_0$, of the flow, an absement, $A = \Sigma_i b_i(t_i - t_0)$, of the flow, and a flow size, $B = \Sigma_i b_i$, of the flow, wherein the flow comprises a plurality of packets, wherein each packet of the plurality of packets is stamped with an absolute time, $t_i$, wherein each packet has a packet size, $b_i$, and wherein $i$ is a positive integer. In particular, the three statistics are collected for each flow, each of them being straightforward to collect, for instance by using a flow collector. Those statistics are sufficient to reconstruct the per-flow BI.

In an implementation form of the first aspect, the device is configured to compute the per-flow BI value, for the flow, by dividing the absement of the flow by the flow size of the flow.

In an implementation form of the first aspect, the device is configured to determine the quality metric value of the web session as a Byte Index value for the web session based on the per-flow BI values computed for the plurality of flows of the web session.

Given the per-flow BI values computed for the plurality of flows of the web session, the session BI can be easily computed.

In an implementation form of the first aspect, the device is configured to collect a flow start time, $t_{0,(j)}$, a per-flow BI value, $BI_{flow,(j)}$, and a flow size, $B_{(j)}$, for each flow $j$ of the web session, wherein j is a positive integer.

The session BI may be obtained based on the per-flow BI values, the flow start times, and the flow sizes of the plurality of flows of the web session.

In an implementation form of the first aspect, the device is further configured to compute a translated BI value, $BI_{tr\_flow,\,(j)}$, for each flow $j$, based on: $BI_{tr\_flow,(j)} = BI_{flow,(j)} + t_{0,(j)} - \min(t_{0,(1)}, t_{0,(2)}, ..., t_{0,(N)})$, wherein the web session comprises $N$ flows, $N$ is a positive integer, and $\min(t_{0,(1)}, t_{0,(2)}, ..., t_{0,(N)})$ is a minimum flow start time over the $N$ flows of the web session.

In an implementation form of the first aspect, the device is further configured to calculate the BI value for the web session, $BI_{session}$, according to:

$$BI_{session} = \frac{\sum_{j=1}^{N} B_{(j)} BI_{tr\_flow,(j)}}{\sum_{i=1}^{N} B_{(j)}}.$$

In an implementation form of the first aspect, the device is configured to approximate a bytes progression of the web session, based on the per-flow BI values, the flow sizes, and the flow starts of the plurality of flows.

To approximate the progression, a time, per-flow BI, and a size of each flow are sufficient.

In an implementation form of the first aspect, the device is further configured to determine another quality metric of the web session, based on the approximated bytes progression of the web session and the calculated BI of the web session.

By using both approximated bytes progression and approximated BI of the web session, it is possible that any WebQoS metric can be trained with a supervised machine learning model.

In an implementation form of the first aspect, wherein the another quality metric comprises a SI or a page load time.

In an implementation form of the first aspect, the web session is an encrypted web session.

The present disclosure is generally designed to evaluate an encrypted web session. However, it is also possible to evaluate an unencrypted web session by using a similar approach.

A second aspect of the present disclosure provides a method for quality evaluation of a web session, wherein the method comprises: receiving the web session, wherein the web session comprises a plurality of flows; computing a set of statistics for a flow of the plurality of flows; computing per-flow quality metric values for the plurality of flows based on the set of statistics computed for the flow;
and determining a quality metric value of the web session based on the computed per-flow quality metric values.

In an implementation form of the second aspect, the per-flow quality metric is a per-flow BI, and the device is configured to compute the set of statistics for the flow based on a flow start time of the flow, a flow size of the flow, and an absement of the flow.

In an implementation form of the second aspect, the set of statistics, for the flow, comprises at least the following three statistics: an absolute flow start time, $t_0$, of the flow, an absement, $A = \Sigma_i\, b_i(t_i - t_0)$, of the flow, and a flow size, $B = \Sigma_i\, b_i$, of the flow, wherein the flow comprises a plurality of packets, wherein each packet of the plurality of packets is stamped with an absolute time, $t_i$, wherein each packet has a packet size, $b_i$, and wherein $i$ is a positive integer.

In an implementation form of the second aspect, the method further comprises computing the per-flow BI value, for the flow, by dividing the absement of the flow by the flow size of the flow.

In an implementation form of the second aspect, the method further comprises determining the quality metric value of the web session as a Byte Index value for the web session based on the per-flow BI values computed for the plurality of flows of the web session.

In an implementation form of the second aspect, the method further comprises collecting a flow start time, $t_{0,(j)}$, a per-flow BI value, $BI_{flow,(j)}$, and a flow size, $B_{(j)}$, for each *flow j* of the web session, wherein j is a positive integer.

In an implementation form of the second aspect, the method further comprises computing a translated BI value, $BI_{tr\_flow,\,(j)}$, for each *flow j*, based on: $BI_{tr\_flow,(j)} = BI_{flow,(j)} + t_{0,(j)} - \min(t_{0,(1)}, t_{0,(2)}, ..., t_{0,(N)})$, wherein the web session comprises $N$ flows, $N$ is a positive integer, and $\min(t_{0,(1)}, t_{0,(2)}, \cdots, t_{0,(N)})$ is a minimum flow start time over the $N$ flows of the web session.

In an implementation form of the second aspect, the method further comprises calculating the BI value for the web session, $BI_{session}$, according to:

$$BI_{session} = \frac{\sum_{j=1}^{N} B_{(j)} BI_{tr\_flow,(j)}}{\sum_{j=1}^{N} B_{(j)}}.$$

In an implementation form of the second aspect, the method further comprises approximating a bytes progression of the web session, based on the per-flow BI values, the flow sizes, and the flow starts of the plurality of flows.

In an implementation form of the second aspect, the method further comprises determining another quality metric of the web session, based on the approximated bytes progression of the web session and the calculated BI of the web session.

In an implementation form of the second aspect, wherein the another quality metric comprises a SI or a page load time.

In an implementation form of the second aspect, wherein the web session is an encrypted web session.

The method of the second aspect and its implementation forms provide the same advantages and effects as described above for the device of the first aspect and its respective implementation forms.

A third aspect of the present disclosure provides a computer program product comprising a program code for carrying out, when implemented and run on a processor, the method steps according to the second aspect or any of its implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms will be explained in the following description of specific embodiments in relation to the enclosed drawings, in which

FIG. 1     shows a device according to an embodiment of the invention.

FIG. 2     shows a flow and a set of statistics for the flow according to an embodiment of the invention.

FIG. 3     shows a flow and a per-flow BI according to an embodiment of the invention.

FIG. 4     shows a bytes progression at packet level compared to a bytes progression at flow level according to an embodiment of the invention.

FIG. 5     shows two flows according to embodiments of the invention.

FIG. 6     shows a method according to an embodiment of the invention.

DETAILED DESCRIPTION OF EMBODIMENTS

Illustrative embodiments of method, device, and program product for efficient packet transmission in a communication system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

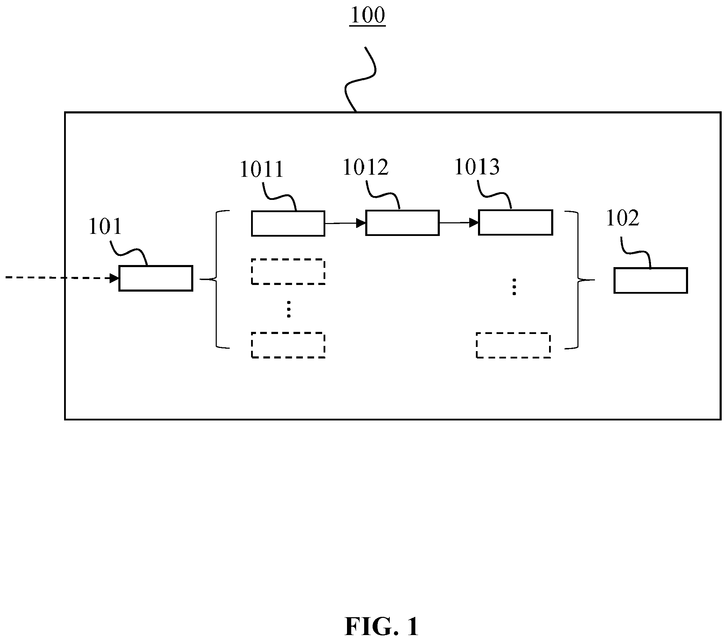

FIG. 1 shows a device 100 according to an embodiment of the invention. The device 100 is adapted for quality evaluation of a web session 101. In particular, the device 100 is configured to receive the web session 101, wherein the web session 101 comprises a plurality of flows 1011. Further, the device 100 is configured to compute a set of statistics 1012 for a flow 1011 of the plurality of flows, and then compute a per-flow quality metric value 1013 based on the set of statistics 1012 computed for the flow 1011. Further, the device 100 is configured to determine a quality metric value 102 of the web session 101 based on the computed per-flow quality metric value 1013.

The device 100 may comprise processing circuitry (not shown) configured to perform, conduct or initiate the various operations of the device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described herein.

To infer quality metrics from network traffic, examples of solutions provide two directions. Non-encrypted traffic from http logs is not so relevant nowadays, because of pervasive encryption of the network traffic. This mainly concerns the encrypted traffic from a single web session.

One direction focuses on finding a support flow, which correlates with WebQoS metrics. In an example, a BestCheckpoint is used. That is, for each website, a specific support domain is found, such that a difference of a support time and a core time correlates with a certain WebQoS metric. In another example, a passive indicator index is used. In this way, support domains are separated into multiple groups and one of them is selected. The index is the difference of a last support time of the selected group and the core time. Notably, the above mentioned solutions are not for approximating WebQoS metrics but only finding correlations.

The other direction focuses on using BI at a packet level. Some examples approximate WebQoS metrics based on packet-level information. In such cases, a high computational cost is expected, since the approximation is done directly at packet-level (since all packets need to be kept). Notably , it has not been possible to implement such a method in a router.

Instead of looking at the packet level, the embodiments of the present invention provide solutions to compute quality metrics of a web session at the flow level. Notably, a web session comprises multiple flows, wherein a flow comprises a sequence of packets from a source to a destination.

The embodiments of the invention solve two challenges:

- First, only standard network flow export may be used to summarize information of interest of each flow, which makes it straightforward to implement, for example, in a flow collector. Most of the information of each flow may be summarized into a per-flow quality metric such as BI.
- Then, a quality metric of the whole web session may be reconstructed, given the per-flow quality metric of each flow. That is, a lossless methodology is thus provided, which means that the results of computing quality metrics of the web session at flow level, are as good as the computing performed at the packet level.

In particular, according to an embodiment of the invention, the per-flow quality metric may be a per-flow BI, and the device 100 may be configured to compute the set of statistics 1012 for the flow 1011 based on a flow start time of the flow 1011, a flow size of the flow 1011, and an absement of the flow 1011.

Generally speaking, BI refers to an integral of complementary byte-level completion. There may be different types of BI, such as application BI (App-BI), in which bytes are seen from an encoded size of objects in the browser, and network BI (Net-BI), in which bytes are seen from a size of packets in the network.

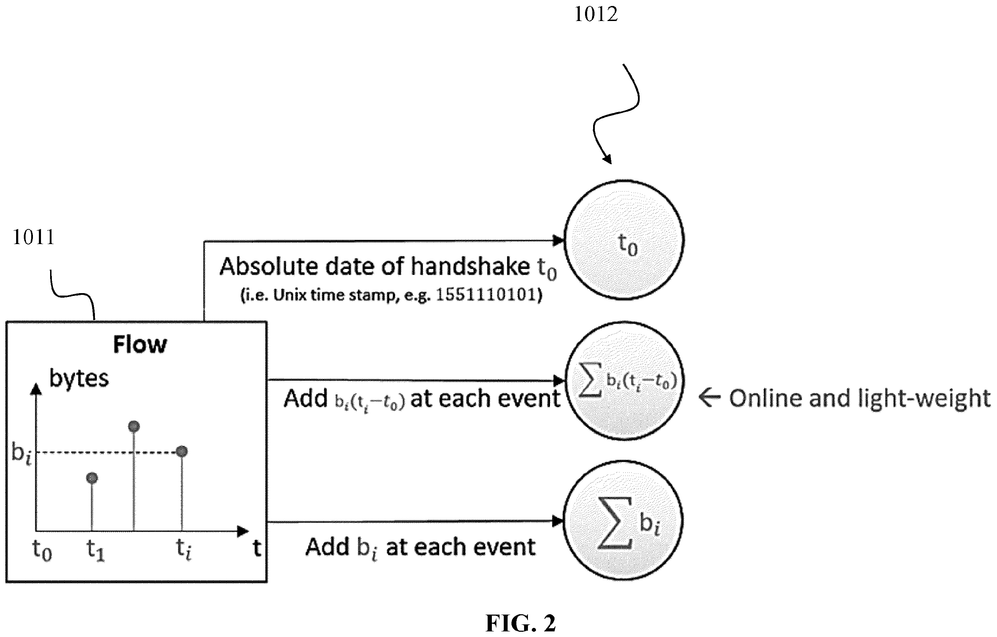

FIG. 2 shows a flow and a set of statistics 1012 for the flow 1011 according to an embodiment of the invention. Optionally, the set of statistics 1012 for the flow 1011 may comprise at least the following three statistics: an absolute flow start time, $t_0$, of the flow 1011; an absement, $A = \Sigma_i\, b_i(t_i - t_0)$, of the flow 1011; and a flow size, $B = \Sigma_i\, b_i$, of the flow 1011. In particular, the flow 1011 comprises a plurality of packets, wherein each packet of the plurality of packets is stamped with an absolute time, $t_i$, wherein each packet has a packet size, $b_i$, and wherein $i$ is a positive integer. Online computation of those three statistics for each flow is represented in FIG. 2.

Detailed algorithm for computing the absement A may be performed as following:

- initialize $A \leftarrow 0$
- let $t_0$ the absolute date of flow start
- for each packet of the current flow, which is stamped with the absolute time $t_i$ and the packet size $b_i$, do: $A \leftarrow A + b_i(t_i - t_0)$

- return A.

According to this embodiment, the aforementioned three statistics are collected for each flow, each of them being straightforward to collect (e.g., sum and product). Those statistics are sufficient to reconstruct the per-flow BI.

According to an embodiment of the invention, the device 100 may be further configured to compute the per-flow BI value, for the flow 1011, by dividing the absement of the flow 1011 by the flow size of the flow 1011.

Herein describes how to reconstruct the per-flow BI given the three statistics collected according to the previous embodiments. The per-flow BI $BI_{flow}$ for the current flow is the quotient between the absement A and the flow size B, i.e., $BI_{flow} = \dfrac{A}{B}$ .

According to an embodiment of the invention, the device 100 may be further configured to determine the quality metric value of the web session 101 as a BI value for the web session 101 based on the per-flow BI values computed for the plurality of flows of the web session 101.

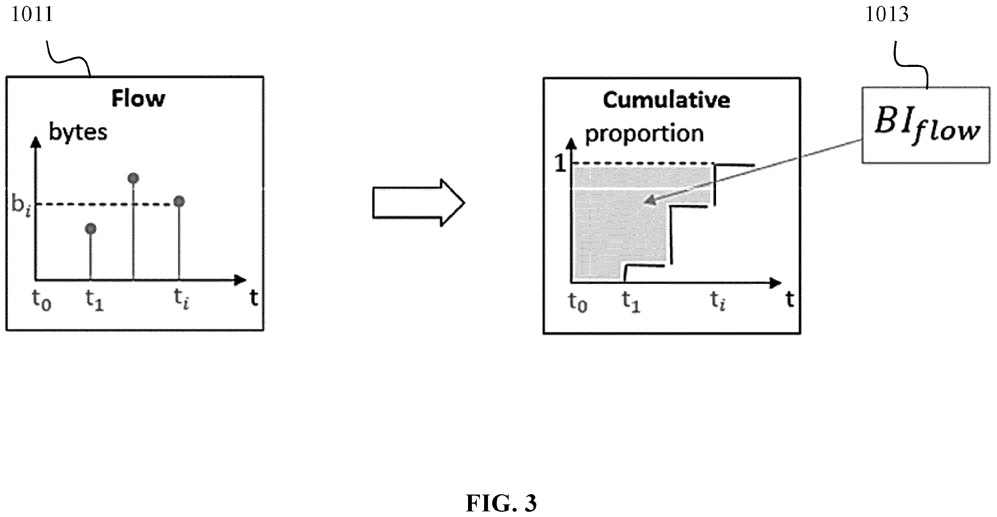

Based on the aforementioned embodiments, it can be seen that, the per-flow BI for the current flow is $\dfrac{A}{B} = \dfrac{\sum_i b_i(t_i - t_0)}{\sum_i b_i}$ . Each term of the sum is the product between a proportion and a difference of time, and the sum corresponds to the gray area shown in FIG. 3.

Optionally, for each flow j of the web session 101, wherein j is a positive integer, the device 100 may be configured to collect a flow start time, $t_{0,(j)}$, a per-flow BI value, $BI_{flow,(j)}$, and a flow size, $B_{(j)}$.

Further, the device 100 may be configured to compute a translated BI value, $BI_{tr\_flow,\,(j)}$, for each flow $j$. The translated BI represents the BI of each flow being shifted by a certain value, such that the time reference (which is initially a time of the first byte of the respective flow) becomes a time of the first byte of the whole web session. In particular, the translated BI value of each flow $j$ is calculated based on:

$BI_{tr\_flow,(j)} = BI_{flow,(j)} + t_{0,(j)} - \min(t_{0,(1)},\, t_{0,(2)},\, ...,\, t_{0,(N)})$,

where $N$ represents the number of the flows comprised in the web session 101, and $\min(t_{0,(1)},\, t_{0,(2)},\, \cdots,\, t_{0,(N)})$ is a minimum flow start time over the $N$ flows of the web session 101, where $N$ is a positive integer. The absolute time of reference for the whole web session is a time of the first byte of the web session, i.e. $\min(t_{0,(1)},\, t_{0,(2)},\, \cdots,\, t_{0,(N)})$.

Accordingly, with the above computed per-flow quality metric, i.e., the per-flow BI value of each flow in the whole web session 101, a quality metric, i.e., the BI value, of the web session 101 can be reconstructed.

In particular, according to an embodiment of the invention, the device 100 may be further configured to calculate the BI value for the web session 101, namely,

$BI_{session}$, according to:

$$BI_{session} = \frac{\sum_{j=1}^{N} B_{(j)} BI_{tr\_flow,(j)}}{\sum_{j=1}^{N} B_{(j)}}.$$

Notably, the sum is over the different flows contributing to the web session 101. That is, in both the numerator and denominator of the equation, the sum is over all the flows of the web session 101. Based on the previous embodiment, the web session 101 comprises $N$ flows in total.

It should be understood that the session net-BI value computed from the precomputed per-flow net-BI values may be mathematically proven to be exactly the same as the net-BI value computed from packets. That is, such method is a lossless methodology. The present disclosure thus provides an advanced solution for rebuilding the session BI.

In addition, given the per-flow BI values of a web session 101, it may allow immediately to get a rough approximation of bytes progression, without additional cost. Accordingly, the device 100 may be configured to approximate a bytes progression of the web session 101, based on the per-flow BI values, the flow sizes and the flow starts of the plurality of flows 1011.

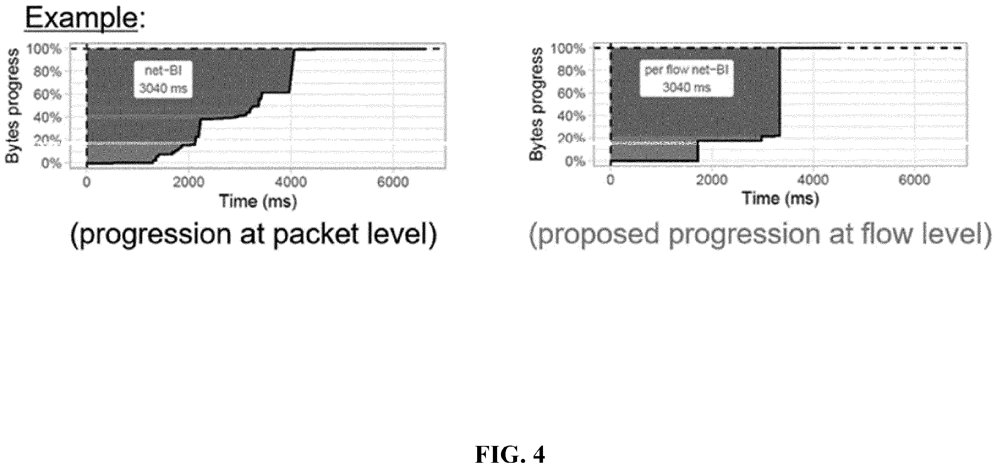

FIG. 4 shows a bytes progression at packet level compared to a bytes progression at flow level for a device 100 according to an embodiment of the invention. In particular, translated BI values and flow sizes of the plurality of flows 1011 may be needed to approximate the bytes progression. According to the previous embodiment, the translated BI values are obtained from the per-flow BI values and the flow starts of the plurality of flows 1011. Given the per-flow BI values, the flow sizes and the flow starts of the plurality of flows 1011, the bytes progression of the web session 101 can be approximated.

Moreover, according to an embodiment of the invention, the device 100 may be further configured to determine another quality metric of the web session 101. For instance, as a net-BI value is computed, according to some embodiments of this invention, other WebQoS metrics, such as a SI or a page load time of the web session 101, may be trained with a supervised machine learning model. In this embodiment, the training may be performed based on the approximated bytes progression of the web session 101 and the calculated BI of the web session 101. It can be understood that a methodology and an accuracy of such approach are similar to what is done at packet level.

Optionally, the web session 101, according to embodiments of the invention, is an encrypted web session. Notably, an unencrypted web session may also be evaluated according to the present disclosure.

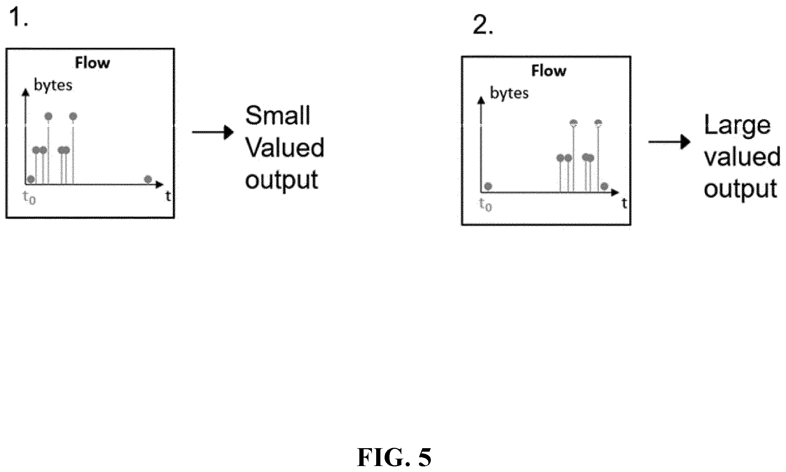

FIG. 5 shows two types of flows according to embodiments of the invention. Notably, as shown in the left part of the FIG. 5, given a flow with most of the content at the beginning of the flow but with a long timeout, this results in a relatively small output value. On the other hand, as shown in the right part of FIG. 5, given a flow with most of the content at the end of the flow, this results in a relatively large output value. This output value may be a per-flow BI value.

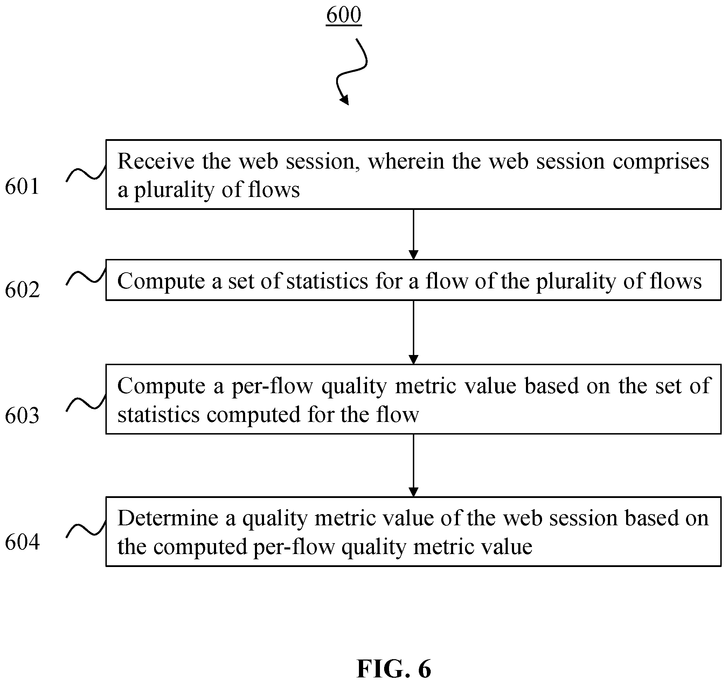

FIG. 6 shows a method 600 for quality evaluation of a web session 101 according to an embodiment of the invention. In a particular embodiment of the invention, the method 600 is performed by a device 100 shown in FIG. 1. The method 600 comprises: a step 601 of receiving the web session, wherein the web session 101 comprises a plurality of flows; a step 602 of computing a set of statistics 1012 for a flow of the plurality of flows; a step 603 of computing a per-flow quality metric value 1013 based on the set of statistics 1012 computed for the flow 1011; and a step 604 of determining a quality metric value of the web session 101 based on the computed per-flow quality metric value 1013.

Optionally, according to an embodiment of the invention, the per-flow quality metric value 1013 may be a per-flow BI value, and the method 600 may further comprise computing the set of statistics 1012 for the flow 1011 based on a flow start time of the flow 1011, a flow size of the flow 1011, and an absement of the flow 1011.

Optionally, according to an embodiment of the invention, the set of statistics 1012, for the flow 1011, comprises at least the following three statistics: an absolute flow start time, $t_0$, of the flow 1011, an absement, $A = \Sigma_i b_i(t_i - t_0)$, of the flow 1011, and a flow size, $B = \Sigma_i b_i$, of the flow 1011, wherein the flow 1011 comprises a plurality of packets, wherein each packet of the plurality of packets is stamped with an absolute time, $t_i$, wherein each packet has a packet size, $b_i$, and wherein $i$ is a positive integer.

Further, the method 600 may comprise computing the per-flow BI value, for the flow, by dividing the absement of the flow 1011 by the flow size of the flow 1011.

Optionally, the method 600 may further comprise determining the quality metric value of the web session 101 as a Byte Index value for the web session 101 based on the per-flow BI values computed for the plurality of flows 1011 of the web session 101.

Optionally, the method 600 may further comprise collecting a flow start time, $t_{0,(j)}$, a per-flow BI value, $BI_{flow,(j)}$, and a flow size, $B_{(j)}$, for each flow j of the web session 101, wherein $j$ is a positive integer.

Accordingly, the method 600 may further comprise computing a translated BI value, $BI_{tr\_flow,(j)}$, for each flow $j$, based on: $BI_{tr\_flow,(j)} = BI_{flow,(j)} + t_{0,(j)} - min(t_{0,(1)}, t_{0,(2)}, \cdots, t_{0,(N)})$. where the web session 101 comprises $N$ flows, $N$ is a positive integer, and $min(t_{0,(1)}, t_{0,(2)}, ..., t_{0,(N)})$ is a minimum flow start time over the $N$ flows of the web session 101.

Further, the method 600 may comprise calculating the BI value for the web session 101, $BI_{session}$,

according to: $$BI_{session} = \frac{\sum_{j=1}^{N} B_{(j)} BI_{tr\_flow,(j)}}{\sum_{j=1}^{N} B_{(j)}}.$$

Optionally, the method 600 may further comprise approximating a bytes progression of the web session 101, based on the per-flow BI values and the flow sizes of the plurality of flows 1011.

The method 600 may further comprise determining another quality metric of the web session 101, based on the approximated bytes progression of the web session 101 and the calculated BI of the web session 101. In particular, the another quality metric may comprise a SI or a page load time. The determination may be performed by training using a machine learning model.

Notably, the web session 101 according to an embodiment of the invention may be an encrypted web session.

To summarize, the present disclosure proposes to approximate a quality metric of a web session, particularly the BI metric from an encrypted session, at the flow level, efficiently and online. Embodiments of this invention provide per-flow computations and a per-web session computation. The per-flow computations include computing three statistics in the flow collector, and retrieving a per-flow BI value from those three statistics. The per-web session computation is, in particular, performed after flow filtering, and includes approximating the BI application metric from per-flow BI values.

Additionally, it is possible to leverage a BI curve and BI value to approximate other relevant metrics using machine learning. Embodiments of the invention allow for an implementation into a router/collector that supports per-flow export (e.g., an Internet Protocol (IP) flow information export (IPFIX) compliant router/collector).

In this way, a network metric which closely approximates an existing in-browser metric, is computed. The computed metric is also highly correlated with other WebQoS metrics. In addition, the metric is computed at the flow level, which reduces more than 10 times of the computational complexity compared to working at the packet level. This solution can also be easily adopted to the existing state-of-the-art algorithm, since there is only one statistic that needs to be added in the flow collector.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the device 100 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the device 100 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

**Claims**

1. A device (100) for quality evaluation of a web session (101), wherein the device (100) is configured to:

    receive the web session (101), wherein the web session (101) comprises a plurality of flows (1011); compute a set of statistics (1012) for a flow (1011) of the plurality of flows;
    compute per-flow quality metric values (1013) for the plurality of flows based on the set of statistics (1012) computed for the flow (1011); and

    determine a quality metric value (102) of the web session (101) based on the computed per-flow quality metric values (1013).

2. The device (100) according to claim 1, wherein the per-flow quality metric value (1013) is a per-flow Byte Index, BI, value, and the device (100) is configured to compute the set of statistics (1012) for the flow (1011) based on a flow start time of the flow (1011), a flow size of the flow (1011), and an absement of the flow (1011).

3. The device (100) according to claim 1 or 2, wherein the set of statistics (1012), for the flow (1011), comprises at least the following three statistics:

   an absolute flow start time, t0, of the flow (1011),
   an absement, $A = \sum_i b_i(t_i - t_0)$, of the flow (1011), and
   a flow size, $B = \sum_i b_i$, of the flow (1011),
   wherein the flow (1011) comprises a plurality of packets, wherein each packet of the plurality of packets is stamped with an absolute time, ti, wherein each packet has a packet size, bi, and wherein i is a positive integer.

4. The device (100) according to claim 2 or 3, configured to compute the per-flow BI value, for the flow, by dividing the absement of the flow (1011) by the flow size of the flow (1011).

5. The device (100) according to one of the claims 2 to 4, configured to determine the quality metric value of the web session (101) as a Byte Index value for the web session (101) based on the per-flow BI values computed for the plurality of flows of the web session (101).

6. The device (100) according to one of the claims 2 to 5, configured to collect a flow start time, $t_{0,(j)}$, a per-flow BI value, $BI_{flow,(j)}$, and a flow size, $B_{(j)}$, for each flow j of the web session (101), wherein j is a positive integer.

7. The device (100) according to one of the claims 2 to 6, configured to approximate a bytes progression of the web session (101), based on the per-flow BI values, the flow sizes, and the flow starts of the plurality of flows.

8. A method (600) for quality evaluation of a web session (101), wherein the method (600) comprises:

   receiving (601) the web session (101), wherein the web session (101) comprises a plurality of flows (1011);
   computing (602) a set of statistics (1012) for a flow (1011) of the plurality of flows;
   computing (603) per-flow quality metric values (1013) for the plurality of flows based on the set of statistics (1012) computed for the flow (1011); and

   determining (604) a quality metric value of the web session (101) based on the computed per-flow quality metric values (1013).

9. The method (600) according to claim 8, wherein the per-flow quality metric value (1013) is a per-flow Byte Index, BI, value, and the method (600) further comprises computing the set of statistics (1012) for the flow (1011) based on a flow start time of the flow (1011), a flow size of the flow (1011), and an absement of the flow (1011).

10. The method (600) according to claim 8 or 9, wherein the set of statistics (1012), for the flow (1011), comprises at least the following three statistics:

    an absolute flow start time, t0, of the flow (1011),
    an absement, $A = \sum_i b_i(t_i - t_0)$, of the flow (1011), and
    a flow size, $B = \sum_i b_i$, of the flow (1011),
    wherein the flow (1011) comprises a plurality of packets, wherein each packet of the plurality of packets is stamped with an absolute time, ti, wherein each packet has a packet size, bi, and wherein i is a positive integer.

11. The method (600) according to claim 9 or 10, wherein the method (600) further comprises computing the per-flow BI value, for the flow, by dividing the absement of the flow (1011) by the flow size of the flow (1011).

12. The method (600) according to one of the claims 9 to 11, wherein the method (600) further comprises determining the quality metric value of the web session (101) as a Byte Index value for the web session (101) based on the per-flow BI values computed for the plurality of flows of the web session (101).

13. A computer program product comprising a program code for carrying out, when implemented and run on a processor, the method steps according to one of the claims 8 to 12.

**Patentansprüche**

1. Vorrichtung (100) zur Qualitätsbewertung einer Websitzung (101), wobei die Vorrichtung (100) zu Folgendem konfiguriert ist:

   Empfangen der Websitzung (101), wobei die Websitzung (101) eine Vielzahl von Flüssen (1011) umfasst;
   Berechnen eines Satzes von Statistiken (1012) für einen Fluss (1011) der Vielzahl von Flüssen;
   Berechnen von Qualitätsmetrikwerten (1013) pro Fluss für die Vielzahl von Flüssen basierend auf dem Satz von Statistiken (1012), der für den Fluss (1011) berechnet wurde; und
Bestimmen eines Qualitätsmetrikwerts (102) der Websitzung (101) basierend auf den berechneten Qualitätsmetrikwerten (1013) pro Fluss.

2. Vorrichtung (100) nach Anspruch 1, wobei der Qualitätsmetrikwert (1013) pro Fluss ein Byteindexwert, BI-Wert, pro Fluss ist und die Vorrichtung (100) dazu konfiguriert ist, den Satz von Statistiken (1012) für den Fluss (1011) basierend auf einer Flussstartzeit des Flusses (1011), einer Flussgröße des Flusses (1011) und einer Verschiebung des Flusses (1011) zu berechnen.

3. Vorrichtung (100) nach Anspruch 1 oder 2, wobei der Satz von Statistiken (1012) für den Fluss (1011) mindestens die folgenden drei Statistiken umfasst:

   eine absolute Flussstartzeit, t0, des Flusses (1011),
   eine Verschiebung, $A = \Sigma_i b_i (t_i - t_0)$, des Flusses (1011) und
   eine Flussgröße, $B = \Sigma_i b_i$, des Flusses (1011), wobei der Fluss (1011) eine Vielzahl von Paketen umfasst, wobei jedes Paket der Vielzahl von Paketen mit einer absoluten Zeit, ti, gestempelt ist, wobei jedes Paket eine Paketgröße, bi, aufweist und wobei i eine positive ganze Zahl ist.

4. Vorrichtung (100) nach Anspruch 2 oder 3, die dazu konfiguriert ist, den BI-Wert pro Fluss für den Fluss durch Dividieren der Verschiebung des Flusses (1011) durch die Flussgröße des Flusses (1011) zu berechnen.

5. Vorrichtung (100) nach einem der Ansprüche 2 bis 4, die dazu konfiguriert ist, den Qualitätsmetrikwert der Websitzung (101) als einen Byteindexwert für die Websitzung (101) basierend auf den BI-Werten per Fluss, die für die Vielzahl von Flüssen der Websitzung (101) berechnet werden, zu bestimmen.

6. Vorrichtung (100) nach einem der Ansprüche 2 bis 5, die dazu konfiguriert ist, für jeden Fluss j der Web-Sitzung (101) eine Flussstartzeit $t_{0,(j)}$, einen BI-Wert pro Fluss, $BI_{Fluss,\ (j)}$, und eine Flussgröße, $B_{(j)}$, zu erfassen, wobei j eine positive ganze Zahl ist.

7. Vorrichtung (100) nach einem der Ansprüche 2 bis 6, die dazu konfiguriert ist, einen Byteverlauf der Websitzung (101) basierend auf den BI-Werten pro Fluss, den Flussgrößen und den Flussstarts der Vielzahl von Flüssen anzunähern.

8. Verfahren (600) zur Qualitätsbewertung einer Websitzung (101), wobei das Verfahren (600) Folgendes umfasst:

   Empfangen (601) der Websitzung (101), wobei die Websitzung (101) eine Vielzahl von Flüssen (1011) umfasst;
   Berechnen (602) eines Satzes von Statistiken (1012) für einen Fluss (1011) der Vielzahl von Flüssen;
   Berechnen (603) von Qualitätsmetrikwerten (1013) pro Fluss für die Vielzahl von Flüssen basierend auf dem Satz von Statistiken (1012), der für den Fluss (1011) berechnet wurde; und
   Bestimmen (604) eines Qualitätsmetrikwerts der Websitzung (101) basierend auf den berechneten Qualitätsmetrikwerten (1013) pro Fluss.

9. Verfahren (600) nach Anspruch 8, wobei der Qualitätsmetrikwert (1013) pro Fluss ein Byteindexwert, BI-Wert, pro Fluss ist und das Verfahren (600) ferner Berechnen des Satzes von Statistiken (1012) für den Fluss (1011) basierend auf einer Flussstartzeit des Flusses (1011), einer Flussgröße des Flusses (1011) und einer Verschiebung des Flusses (1011) umfasst.

10. Verfahren (600) nach Anspruch 8 oder 9, wobei der Satz von Statistiken (1012) für den Fluss (1011) mindestens die folgenden drei Statistiken umfasst:

    eine absolute Flussstartzeit, t0, des Flusses (1011),
    eine Verschiebung, $A = \Sigma_i b_i(t_i - t_0)$, des Flusses (1011) und
    eine Flussgröße, $B = \Sigma_i b_i$, des Flusses (1011), wobei der Fluss (1011) eine Vielzahl von Paketen umfasst, wobei jedes Paket der Vielzahl von Paketen mit einer absoluten Zeit, ti, gestempelt ist, wobei jedes Paket eine Paketgröße, bi, aufweist und wobei i eine positive ganze Zahl ist.

11. Verfahren (600) nach Anspruch 9 oder 10, wobei das Verfahren (600) ferner Berechnen des BI-Werts pro Fluss für den Fluss durch Dividieren der Verschiebung des Flusses (1011) durch die Flussgröße des Flusses (1011) umfasst.

12. Verfahren (600) nach einem der Ansprüche 9 bis 11, wobei das Verfahren (600) ferner Bestimmen des Qualitätsmetrikwerts der Websitzung (101) als einen Byteindexwert für die Websitzung (101) basierend auf den BI-Werten per Fluss, die für die Vielzahl von Flüssen der Websitzung (101) berechnet werden, umfasst.

13. Computerprogrammprodukt, umfassend einen Programmcode zum Ausführen, wenn er auf einem Prozessor umgesetzt wird und läuft, der Verfahrensschritte nach einem der Ansprüche 8 bis 12.

**Revendications**

1. Dispositif (100) d'évaluation de la qualité d'une session Web (101), dans lequel le dispositif (100) est configuré pour :

   recevoir la session Web (101), dans lequel la session Web (101) comprend une pluralité d'écoulements (1011) ;
   calculer un ensemble de statistiques (1012) pour un écoulement (1011) de la pluralité d'écoulements ;
   calculer les valeurs de métrique de qualité par écoulement (1013) pour la pluralité d'écoulements sur la base de l'ensemble de statistiques (1012) calculées pour l'écoulement (1011) ; et
   déterminer une valeur de métrique de qualité (102) de la session Web (101) sur la base des valeurs de métrique de qualité par écoulement calculées (1013).

2. Dispositif (100) selon la revendication 1, dans lequel la valeur de métrique de qualité par écoulement (1013) est une valeur d'indice d'octet par écoulement, BI, et le dispositif (100) est configuré pour calculer l'ensemble de statistiques (1012) pour l'écoulement (1011) sur la base d'un temps de début d'écoulement de l'écoulement (1011), d'une taille autorisée d'écoulement (1011) et d'une absence d'écoulement (1011).

3. Dispositif (100) selon la revendication 1 ou 2, dans lequel l'ensemble de statistiques (1012), pour l'écoulement (1011), comprend au moins les trois statistiques suivantes :

   un temps de début d'écoulement absolu, t0, de l'écoulement (1011) ,
   une absence, $A = \Sigma_i b_i(t_i - t_0)$, de l'écoulement (1011), et
   une taille d'écoulement, $B = \Sigma_i b_i$, de l'écoulement (1011),
   dans lequel l'écoulement (1011) comprend une pluralité de paquets, dans lequel chaque paquet de la pluralité de paquets est horodaté avec un temps absolu, ti, dans lequel chaque paquet a une taille de paquet, bi, et dans lequel i est un entier positif.

4. Dispositif (100) selon la revendication 2 ou 3, configuré pour calculer la valeur BI par écoulement, pour l'écoulement, en divisant l'absence d'écoulement (1011) par la taille de l'écoulement (1011).

5. Dispositif (100) selon l'une des revendications 2 à 4, configuré pour déterminer la valeur de métrique de qualité de la session Web (101) en tant que valeur d'indice d'octet pour la session Web (101) sur la base des valeurs BI par écoulement calculées pour la pluralité d'écoulements de la session Web (101).

6. Dispositif (100) selon l'une des revendications 2 à 5, configuré pour collecter un temps de début d'écoulement, $t_{0,(j)}$, une valeur BI par écoulement, $BI_{par\,écoulement,(j)}$, et une taille d'écoulement, $B_{(j)}$, pour chaque écoulement j de la session Web (101), dans lequel j est un entier positif.

7. Dispositif (100) selon l'une des revendications 2 à 6, configuré pour approximer une progression d'octets de la session Web (101), sur la base des valeurs BI par écoulement, des tailles d'écoulement et des débuts d'écoulement de la pluralité d'écoulements.

8. Procédé (600) d'évaluation de la qualité d'une session Web (101), dans lequel le procédé (600) comprend :

   la réception (601) de la session Web (101), dans lequel la session Web (101) comprend une pluralité d'écoulements (1011) ;
   le calcul (602) d'un ensemble de statistiques (1012) pour un écoulement (1011) de la pluralité d'écoulements ;
   le calcul (603) des valeurs de métrique de qualité par écoulement (1013) pour la pluralité d'écoulements sur la base de l'ensemble de statistiques (1012) calculées pour l'écoulement (1011) ; et
   la détermination (604) d'une valeur de métrique de qualité de la session Web (101) sur la base des valeurs de métrique de qualité par écoulement calculées (1013).

9. Procédé (600) selon la revendication 8, dans lequel la valeur de métrique de qualité par écoulement (1013) est une valeur d'indice d'octet, BI, par écoulement, et le procédé (600) comprend également le calcul de l'ensemble de statistiques (1012) pour l'écoulement (1011) sur la base d'un temps de début d'écoulement de l'écoulement (1011), d'une taille d'écoulement de l'écoulement (1011) et d'une absence d'écoulement (1011).

10. Procédé (600) selon la revendication 8 ou 9, dans lequel l'ensemble de statistiques (1012), pour l'écoulement (1011), comprend au moins les trois statistiques suivantes :

    un temps de début d'écoulement absolu, t0, de l'écoulement (1011),
    une absence, $A = \Sigma_i b_i(t_i - t_0)$, de l'écoulement (1011), et
    une taille d'écoulement, $B = \Sigma_i b_i$, de l'écoulement (1011),
    dans lequel l'écoulement (1011) comprend une pluralité de paquets, dans lequel chaque paquet de la pluralité de paquets est horodaté avec un temps absolu, ti, dans lequel chaque paquet a une taille de paquet, bi, et dans lequel i est un entier positif.

11. Procédé (600) selon la revendication 9 ou 10, dans lequel le procédé (600) comprend également le calcul de la valeur BI par écoulement, pour l'écoulement, en divisant l'absence d'écoulement (1011) par la taille d'écoulement de l'écoulement (1011).

12. Procédé (600) selon l'une des revendications 9 à 11, dans lequel le procédé (600) comprend également la détermination de la valeur de métrique de qualité de la session Web (101) en tant que valeur d'indice d'octet pour la session Web (101) sur la base des valeurs BI par écoulement calculées pour la pluralité d'écoulements de la session Web (101).

13. Produit de programme informatique comprenant un code de programme pour réaliser, lorsqu'il est mis en œuvre et exécuté sur un processeur, les étapes de procédé selon l'une des revendications 8 à 12.

**FIG. 1**

EP 4 066 445 B1

**FIG. 2**

**FIG. 3**

EP 4 066 445 B1

## Example:

(progression at packet level)

(proposed progression at flow level)

**FIG. 4**

**FIG. 5**

**FIG. 6**

EP 4 066 445 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Inter-stream adaptation for collaborative multimedia applications. **YOUSSEF A et al.** COMPUTERS AND COMMUNICATIONS, 1-3 JULY 1997, LOS ALAMITOS, CA, USA. IEEE COMPUT. SOC, 116-120

- **ALEXIS HUET et al.** *Web Quality of Experience from Encrypted Packets*, vol. 20190819, 30-32